# EUROPEAN PATENT APPLICATION

(11) **EP 1 127 489 A2**
(43) Date of publication of application: **29.08.2001**
(21) Application number: 00126041.3
(22) Date of filing: 29.11.2000
(51) Int. Cl.: A01M 25/00, A01M 29/00

(54) **Repellent thread for rodents**

(30) Priority: 18.02.2000 IT MI200290
(71) Applicant: Tarfil S.r.l., 64010 Civitella del Tronto (Te) (IT)
(72) Inventor: Tartufoli, Carlo, 20154 Milano (IT)
(74) Representative: Mancini, Vincenzo, Dr.

(57) **Abstract**

A repellent thread for rodents is described comprising a multifilament thread of glass impregnated with a solution of quinine and/or a derivative thereof in admixture with a textile size.

## Description

The present invention relates to a repellent thread for rodents.

It is known that cables must be protected in order to limit the damages caused by the so-called external agents, such as, for example, humidity, abrasion, chemical substances present in the atmosphere etc.; rodents represent without doubt a further risk, which clearly brings about damages which are even more serious and which happen with extremely more rapid dynamics with respect to the above mentioned agents, since they cause a blanking of the cable itself and, as a consequence, the interruption of the utility supplied and the frequent substitution of the cable itself.

In order to reduce the damages caused by the presence of rodents, there have been produced cables endowed with metallic sheathing, generally consisting of thread or bands, even of steel.

However, in some electric or optical fibre conductors it is necessary that the sheathing is dielectric.

To this end, there have been produced cables endowed with a sheath containing lethal substances; this solution, however, clearly implies security problems to man as well, besides failing to avoid that at least a part of the cables be damaged. This latter drawback is due to the behaviour of rodents, who, according to what has been studied by ethologists, would adopt exploring strategies before attacking a determined site in group, thereby avoiding eating or at least biting the object which is responsible for the death of one or more of their companions. These observations highlight the unsuitability of the proposed solution in that, as stated, its adoption would cause, at the most, a reduction of the damage but not its elimination.

It has now surprisingly been found, and it is an aspect of the present invention, that a repellent thread for rodents comprising a multifilament thread of glass impregnated with a solution of from 20 to 80% by weight of quinine and/or a derivative thereof in admixture with a textile size, wherein the solution/size ratio ranges from 10 to 90% by weight, can solve the described problems.

In particular, the repellence of the thread of the invention is double, both because of the presence of glass, thus due to a mechanical action, and because of the quinine and/or the derivatives thereof, thus due to a chemical action.

It clearly comes out, therefore, that rodents, in the presence of an artefact repellent to them, which has been realised by the thread of the invention, avoid attacking the cable.

Suitable derivatives of quinine for realizing the invention can be easily selected by the expert in the art. In particular, salts of quinine with inorganic acids, such as, for example, sulphuric acid and hydrochloric acid, result to be preferred. Preferred derivatives for the realization of the invention are quinine mono- and bi- sulphate and hydrochloride.

According to a preferred aspect, the solution of the quinine and/or the derivatives thereof ranges from 40 to 60% by weight, whereas the glass filaments have a diameter of from 5 to 15 µ, in particular 10 µ, and are parallelly assembled without torsion.

A suitable size for realizing the invention can be easily selected by the expert in the art among textile sizes. The preferred textile size for carrying out the invention is low viscosity polyvinyl alcohol with mean hydrolysis, for example LAMCOL, produced by Lamberti.

According to a further aspect, the invention relates also to a cable comprising the thread previously described.

Preferably, the cable of the invention is an optical fibre cable, although it is possible to produce cables for transporting and distributing electric energy, for telecommunications, or for data transmission or even mixed cables for energy/telecommunications.

It was found that a repellent thread for rodents, placed beneath the external sheath of the cable in such a way as to cover the part of the conductor which is to be protected, is not attacked by rodents, thus exerting, as already stated, a double repelling action.

For realizing the treated glass thread, the glass filaments comprised in the thread of the invention are impregnated with a quinine/size mixture and undergo a foulard-like squeezing, that is the thread is allowed to pass through two opposed rolls, and is dried thereafter in a continuos tunnel.

## Claims

1. Repellent thread for rodents comprising a multifilament thread of glass impregnated with a solution of from 20 to 80% by weight of quinine and/or a derivative thereof in admixture with a textile size, wherein the solution/size ratio ranges from 10 to 90% by weight.

2. A thread of glass according to claim 1, wherein the solution of quinine and/or a derivative thereof ranges from 40 to 60% by weight.

3. A thread of glass according to claim 1 or 2, wherein the filaments have a diameter of 5 to 15 µ and are parallelly assembled without torsion.

4. A thread of glass according to claim 3, wherein the filaments have a diameter equal to 10 µ.

5. A thread according to anyone of the preceding claims, wherein the derivative of quinine is selected from mono and bi- sulphate and hydrochloride.

6. Repellent cable for rodents comprising a thread according to anyone of the preceding claims.

7. An optical fibre cable according to claim 6.
